Europäisches Patentamt

European Patent Office (11) Numéro de publication : **0 070 229**

Office européen des brevets **B1**

(19)

(12) **FASCICULE DE BREVET EUROPÉEN**

(45) Date de publication du fascicule du brevet :
09.10.85

(51) Int. Cl.⁴ : **F 02 C 9/28**

(21) Numéro de dépôt : **82401262.9**

(22) Date de dépôt : **06.07.82**

(54) Limiteur de décélération dans un régulateur pour une turbomachine.

(30) Priorité : **08.07.81 FR 8113383**

(43) Date de publication de la demande :
**19.01.83 Bulletin 83/03**

(45) Mention de la délivrance du brevet :
**09.10.85 Bulletin 85/41**

(84) Etats contractants désignés :
**DE FR GB**

(56) Documents cités :
**FR-A- 1 379 530
FR-A- 2 005 028
GB-A- 612 425
GB-A- 639 987
GB-A- 1 228 151
US-A- 3 110 229
US-A- 3 225 814
US-A- 3 596 466**

(73) Titulaire : **SOCIETE NATIONALE D'ETUDE ET DE CONSTRUCTION DE MOTEURS D'AVIATION, "S.N.E.C.M.A."
2 Boulevard Victor
F-75015 Paris (FR)**

(72) Inventeur : **François, Yves-Marie, Michel Robert
117A, Avenue du Colonel Fabien
F-77190 Dammarie les Lys (FR)**
Inventeur : **Vergnes, Jean-Claude
543, Avenue de la Libération
F-75350 Le Mee Sur Seine (FR)**

(74) Mandataire : **Moinat, François et al
S.N.E.C.M.A. Service des Brevets Boîte Postale 81
F-91003 Evry Cedex (FR)**

**Description**

La présente invention concerne un limiteur de décélération associé avec un régulateur pour une turbomachine.

On sait que le doseur de carburant d'une turbomachine est généralement commandé à l'aide d'une manette des gaz, agissant sur un régulateur, dont il existe différentes formes de réalisation connues ; ce régulateur peut comporter par exemple une balance tachymétrique, dont l'équilibre du fléau est influencé par différents organes de commande, agissant sur ses deux bras ; la plupart de ces organes de commande reçoivent des informations d'entrée en provenance de capteurs, détectant différents paramètres de fonctionnement de la turbomachine ; quant à la manette des gaz, elle agit soit directement soit indirectement sur le fléau de la balance tachymétrique par l'intermédiaire d'un organe élastique comprimé, tel qu'un ressort.

On sait d'autre part que les conditions de fonctionnement d'une turbomachine sont régies par la richesse, qui varie comme le rapport C/P du débit de carburant, C, envoyé par le doseur à une pression caractéristique, P, liée au débit d'air traversant la chambre de combustion, notamment la pression de refoulement, P2, du compresseur. En particulier, le rapport caractéristique, C/P, ne doit pas tomber au-dessous d'un minimum déterminé, pour éviter les risques d'extinction pauvre de la ou des chambres de combustion.

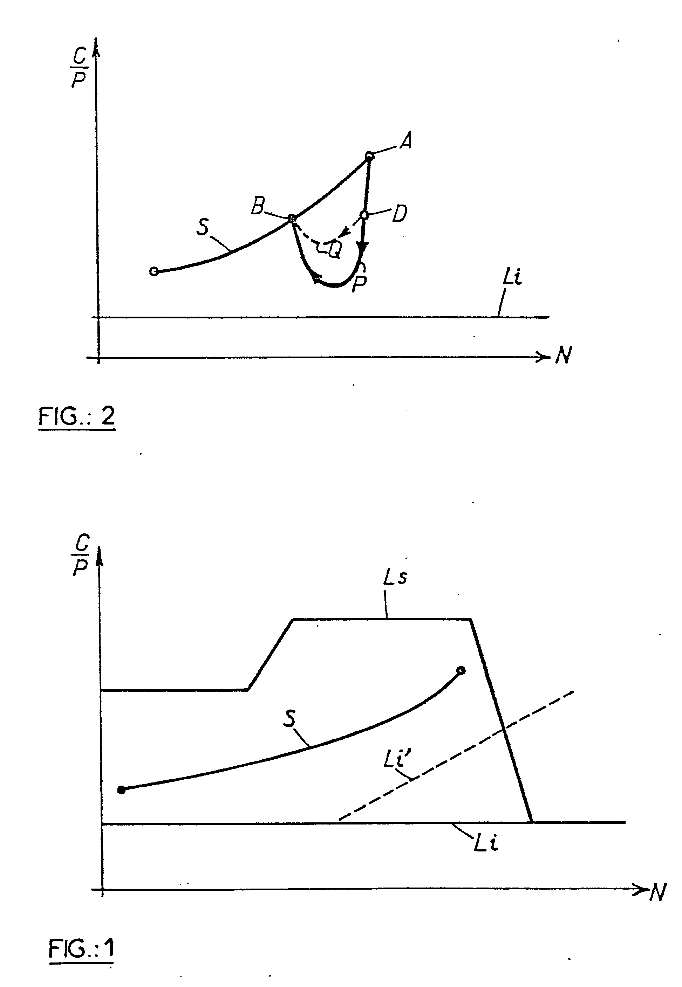

A cet effet, le régulateur qui agit sur le doseur de carburant est généralement muni d'un dispositif spécial, désigné sous le nom de « butée de décélération », dont la fonction est illustrée sur la figure 1 du dessin annexé. Ce diagramme représente les variations du rapport caractéristique C/P en fonction de la vitesse de rotation N de la turbomachine dans différentes conditions de fonctionnement. La courbe S correspond au fonctionnement stable de la turbomachine, par exemple à une charge fixée et à vitesse de croisière uniforme s'il s'agit d'un turboréacteur monté sur un avion. La courbe Li correspond aux limites inférieures qui sont imposées au rapport caractéristique C/P par le dispositif de butée de décélération, tandis que la courbe Ls correspond aux limites supérieures qui sont imposées au rapport C/P par un dispositif de butée d'accélération.

La figure 2 représente, dans le même système de coordonnées que la figure 1, une courbe en trait plein P, correspondant à une décélération brusque, qui, lorsque le pilote actionne brutalement la manette des gaz dans le sens correspondant, fait passer le point de fonctionnement de la turbomachine du point A au point B de sa courbe de fonctionnement stable S. La courbe P du diagramme de la figure 2 montre clairement que les régulateurs utilisés jusqu'à présent, s'ils assurent bien la fonction dite de « butée de décélération » correspondant à la courbe Li, n'évitent cependant pas une décroissance très brutale et très rapide du rapport caractéristique C/P et, par suite, du débit, C, du carburant envoyé par le doseur à la turbomachine , il est évident, et l'on a constaté effectivement, que des chutes aussi rapides et d'aussi grande amplitude du débit de carburant, soumettent la turbomachine à des changements de régime extrêmement brusques, qui se traduisent notamment par des chocs thermiques, ayant parfois pour conséquence d'endommager la turbomachine, et, de toute façon, de réduire sensiblement la durée de vie de ses différents organes.

Le brevet français n° 2 083 444 décrit un régulateur pour le doseur de carburant d'une turbomachine, dans lequel le doseur est lui-même commandé par une soupape, recevant elle-même d'un dispositif mécanique, un signal proportionnel à la racine carrée du rapport caractéristique C/P. Ce dispositif de l'art antérieur est donc complexe, ce qui, dans la technique considérée, entraîne des inconvénients du point de vue de la fiabilité et de la maintenance.

Le brevet français n° 2 005 028 décrit également un régulateur agissant sur le doseur de carburant d'une turbomachine, par l'intermédiaire d'un multiplicateur ; en cas de décélération maximale, l'action de la manette des gaz sur le multiplicateur est limitée par une timonerie extrêmement complexe, venant en butée contre une came tridimensionnelle définissant le programme de variation du rapport caractéristique C/P au cours de la décélération ; cette came tridimensionnelle est déplacée axialement en fonction de la vitesse du compresseur de la turbomachine, tandis que sa position angulaire est influencée par la température à l'entrée du compresseur. La complexité de ce dispositif est encore peu satisfaisante du point de vue de sa fiabilité et de sa maintenance.

Le limiteur de décélération dans un régulateur pour une turbomachine, selon la présente invention, offre l'avantage d'une grande simplicité, qui lui assure une très grande fiabilité et une grande durée de vie. Destiné à une turbomachine dont le doseur de carburant est commandé à l'aide d'une manette des gaz, agissant sur un régulateur, tel qu'une balance tachymétrique, par l'intermédiaire d'un organe élastique comprimé, tel qu'un ressort, le limiteur de décélération dans un régulateur selon la présente invention est caractérisé en ce que le piston libre d'un amortisseur à fluide et un poussoir sont interposés entre l'organe élastique comprimé et une came commandée par la manette des gaz, en ce qu'un fluide d'ambiance agit sur la même face du piston que l'organe élastique, et en ce que la chambre de l'amortisseur dans laquelle le poussoir pénètre de façon étanche, communique avec ledit fluide d'ambiance, par l'intermédiaire, d'une part d'un clapet anti-retour autorisant seulement l'entrée du fluide d'ambiance dans ladite chambre de l'amortisseur, et d'autre part, d'un étranglement approprié.

Dans une forme de réalisation préférée du limiteur de décélération dans un régulateur selon la présente invention, le poussoir, en forme de cylindre creux, est maintenu en contact quasi permanent, par sa base extérieure à l'amortisseur, avec le pourtour d'une came, par exemple rotative, accouplée avec la manette des gaz, par l'action d'un organe élastique tel qu'un ressort, qui est logé à l'intérieur du poussoir cylindrique creux, de façon à être comprimé entre, d'une part, sa base en contact avec la came, et, d'autre part, un prolongement du piston de l'amortisseur, pénétrant dans le poussoir creux par un trou de son autre base. De préférence, le prolongement du piston de l'amortisseur qui pénètre dans le poussoir creux comporte un organe de butée, disposé de façon à coopérer avec la base du poussoir pour limiter supérieurement l'écartement entre le piston et le poussoir en cas de décélération brutale de grande amplitude en écartant momentanément le poussoir de la came. Cette forme de réalisation est particulièrement avantageuse dans la mesure où elle limite non seulement la brutalité de la décélération, mais également son amplitude.

A titre d'exemple, on a décrit ci-dessous et illustré schématiquement au dessin annexé, une forme de réalisation du limiteur de décélération selon la présente invention, appliquée notamment à un régulateur pour turbomachine, comportant une balance tachymétrique d'un type connu.

Les figures 1 et 2 représentent des diagrammes de fonctionnement d'une turbomachine, comme on l'a décrit précédemment.

La figure 3 illustre schématiquement la forme de réalisation de l'invention qui va maintenant être décrite.

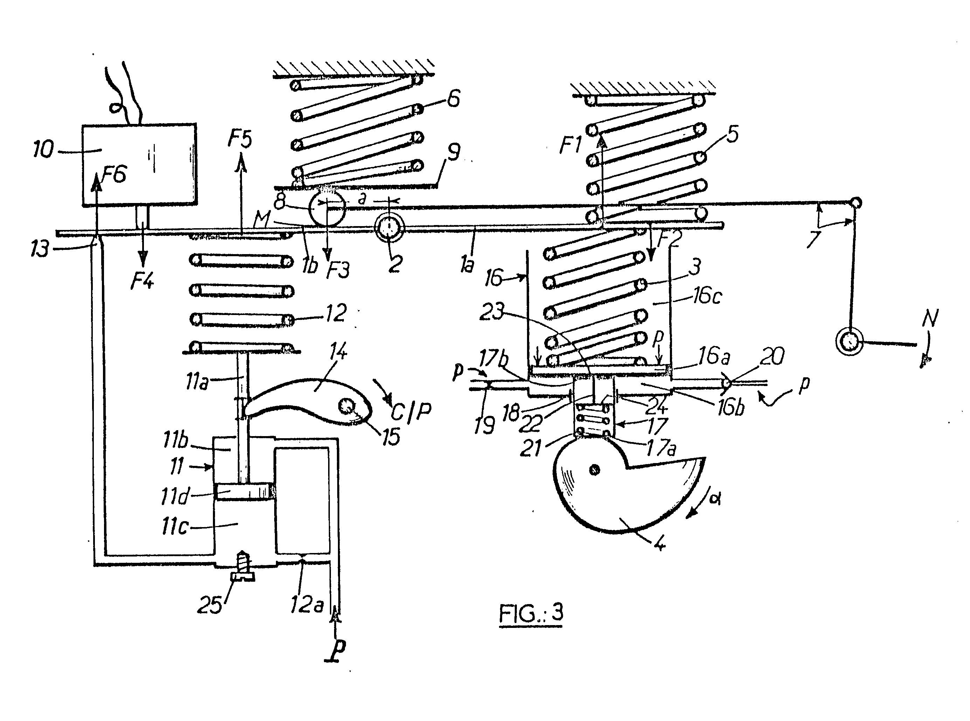

Le régulateur pour turbomachine pour lequel on va décrire l'application de la présente invention, peut être du type connu suivant, donné à titre d'exemple non limitatif : ce régulateur comprend une balance tachymétrique d'un type connu, comprenant un fléau à deux bras 1a et 1b, librement mobile autour d'un axe 2. Ce fléau est en équilibre, en régime permanent, sous les différentes forces suivantes, qui lui sont appliquées : une force F1 (ascendante sur la figure 3) qui est appliquée à un point fixe de son bras 1a, par l'intermédiaire d'un ressort 3, à partir d'une came rotative 4, accouplée avec la manette des gaz (non représentée) ; dans la balance tachymétrique connue, le pourtour de la came rotative 4 agit directement sur le ressort 3, tout au moins avec interposition d'une plaquette métallique ; une force F2, également appliquée à un point fixe du bras 1a du fléau, antagoniste à F1, c'est-à-dire descendante, et produite par un ressort comprimé 5 ; une force descendante, F3, produite par un ressort comprimé 6, et appliquée à un point M du bras 1b du fléau, dont la distance, a, à son axe 2, est modifiée en fonction de la vitesse de rotation N de la turbomachine, par l'intermédiaire d'une tringlerie 7, portant à son extrémité un galet 8, interposé entre le bras 1b du fléau et une plaquette mobile 9, sur laquelle prend appui l'extrémité du ressort comprimé 6 ; une force descendante F4, produite par un moteur électrique 10, commandé lui-même par un signal électrique d'erreur, que produit un calculateur électronique (non représenté), faisant partie du régulateur de la turbomachine ; une force ascendante F5, appliquée à un point fixe du bras 1b du fléau, par la tige 11a d'un vérin 11, par l'intermédiaire d'un ressort comprimé 12 ; les chambres 11b et 11c du vérin 11 reçoivent un fluide sous une pression de commande directement pour la première, et par l'intermédiaire d'un diaphragme 12a pour la chambre 11c ; le fluide qui remplit cette dernière alimente, d'autre part, une buse 13, qui, lorsqu'elle n'est pas complètement obturée par l'extrémité du bras 1b du levier, projette contre elle un jet de fluide sous pression, qui applique en un point fixe dudit bras 1b une force ascendante F6 ; la tige 11a du vérin 11 est elle-même accouplée par un bras rotatif 14, à l'axe de commande 15 du doseur de carburant (non représenté) de la turbomachine ; en d'autres termes, la valeur du rapport caractéristique C/P est fixée par la position angulaire des pièces 14 et 15 et, par suite, par la position du piston 11d du vérin 11.

Le fléau de cette balance tachymétrique est donc en équilibre sous l'action conjuguée des forces F1, F2 et F3, qui correspondent respectivement à des grandeurs d'entrée du régulateur, notamment le régime N de la turbomachine, et la position angulaire $\alpha$ de la manette des gaz, de la force correctrice F4, et enfin des forces F5 et F6, produites en deux points distincts de la boucle d'un servo-mécanisme dont l'organe moteur 11 produit, par son déplacement, la grandeur de sortie C/P.

Selon la présente invention, le piston libre, 16a, d'un amortisseur à fluide, 16, est interposé entre le ressort comprimé 3 et un poussoir 17, commandé par la came rotative 4, accouplée à la manette des gaz ; la chambre 16b, de l'amortisseur 16, dans laquelle le poussoir 17 pénètre de façon étanche par un trou 18 de la face du cylindre amortisseur 16, opposée à son piston 16a, communique avec une source d'un fluide d'ambiance, par exemple un fluide incompressible, sous pression p, par l'intermédiaire d'une part, d'un clapet anti-retour 20 autorisant seulement l'entrée du fluide d'ambiance dans ladite chambre 16b de l'amortisseur et, d'autre part, d'un étranglement 19.

On voit que dans la forme de réalisation qui est illustrée schématiquement l'ensemble du dispositif est supposé baigner dans le fluide d'ambiance, sous pression p, et la pression p règne autour des cylindres 16 et 17 et, de façon générale, dans tout le corps du régulateur. Le fluide d'ambiance remplit également l'autre chambre, 16c ; ouverte à sa partie supérieure, de l'amortisseur 16 ; la face de son piston, 16a, opposée à la chambre, 16b, est donc soumise en permanence à la pression p, de même qu'à l'action du ressort comprimé 3.

D'autre part, le poussoir 17 est en forme de cylindre creux, et il est maintenu en contact quasi permanent, par sa base 17a, extérieure à l'amortisseur 16, avec le pourtour de la came rotative 4, par l'action d'un ressort 21, logé à l'intérieur du poussoir creux 17, de façon à être comprimé entre, d'une part, sa base 17a, et, d'autre part, un prolongement, 22, du piston 16a de l'amortisseur 16, ce prolongement 22 pénètrant dans le poussoir creux 17, par un trou 23 de son autre base 17b. En outre, dans la forme de réalisation considérée, le prolongement 22 du piston 16a de l'amortisseur 16, qui pénètre dans le poussoir creux 17, comporte un organe de butée 24, disposé de façon à limiter supérieurement l'écartement entre le piston 16a et le poussoir 17, comme on l'expliquera ultérieurement ; comme visible sur la figure 3, cet organe de butée 24 a la forme d'une plaquette, fixée perpendiculairement au prolongement 22, de manière à servir d'appui pour le ressort comprimé 21.

Les positions des différents organes représentés sur la figure 3 correspondant à un point de fonctionnement stable de la turbomachine (par exemple B sur le diagramme de la figure 2). La came rotative 4 occupant une position angulaire déterminée par celle de la manette des gaz, elle applique une force déterminée F1 au bras 1a du fléau de la balance tachymétrique, par l'intermédiaire des trois pièces 17, 16a et 3, maintenues en contact les unes avec les autres, notamment grâce à l'action du ressort comprimé 3 et à la réaction du bras de levier 1a. Dans cette situation en effet, et quel que soit le régime affiché, tout comme au cours de toute manœuvre en dehors de celles de décélérations brutales et de grande amplitude durant lesquelles intervient le dispositif selon l'invention, la base 17b du poussoir 17 s'appuie sur le piston 16a et le ressort 21 fournit un effort plus faible que l'effort F1 donné par le ressort 3.

Si le pilote actionne la manette des gaz dans le sens correspondant à une accélération, il en résulte une rotation de la came 4 dans le sens des aiguilles d'une montre, le pourtour de ladite came poussant les pièces 17 et 16a, restant en contact l'une avec l'autre sur la base 17b du poussoir 17, en direction du bras 1a du fléau ; la force F1, transmise par le ressort comprimé 3, augmente par suite, ce qui tend à faire pivoter le fléau autour de son axe 2, dans le sens inverse des aiguilles d'une montre (sur la figure 3). Le bras 1b du fléau va donc obturer la buse 13, ce qui produit un accroissement de la pression régnant dans la chambre 11c du vérin 11, dont le piston 11d se soulève ; il en résulte d'une part un pivotement de l'axe de commande 15 du doseur dans le sens des aiguilles d'une montre correspondant à un accroissement du débit de carburant C puis du régime N, donc à un déplacement du galet 8, et, d'autre part, un accroissement de la force F5 que la tige 11a du vérin 11 applique au

bras 1b du fléau par l'intermédiaire du ressort 12, ce qui a pour effet de ramener ledit fléau dans sa position initiale d'équilibre. Le dispositif selon la présente invention, qui comprend essentiellement les organes 16, 17, 19, 20, 21, 22, n'affecte pas le déroulement d'une telle phase d'accélération, dans la mesure où il ne cesse pas d'exister alors une liaison entre les organes 4, 17 et 16a, la came 4 et le poussoir 17, d'une part, restant en contact et la base 17b du poussoir 17 s'appuyant sur le piston 16a, d'autre part. Bien entendu, au cours du mouvement ascendant, synchrone, du poussoir 17 et du piston 16a de l'amortisseur 16, la pression régnant dans sa chambre 16b est maintenue sensiblement égale à p, malgré l'accroisement continu du volume de ladite chambre 16b, grâce à l'ouverture du clapet anti-retour 20, qui laisse ainsi entrer dans ladite chambre des quantités appropriées de fluide sous la pression p.

Lorsque, par contre, à partir d'une position stable correspondant au point A sur la figure 2 et atteinte par exemple au cours de l'accélération qui vient d'être décrite, le pilote de la turbomachine exerce sur la manette des gaz une action brutale, correspondant à une décélération très brusque, et produisant notamment une rotation de la came 4 dans le sens inverse à celui des aiguilles d'une montre, le poussoir 17 descend très rapidement de façon que sa base 17a ne cesse pratiquement pas d'être en contact avec le pourtour de la came 4, et cela grâce à la détente du ressort 21, prenant appui sur le piston 16a de l'amortisseur 16, par l'intermédiaire des pièces 22 et 24. Cette descente du poussoir 17 produit un accroissement du volume de la chambre 16b compensé par un rapide mouvement de descente du piston 16a, dû à la détente du ressort comprimé 3 ; il en résulte une diminution de la force F1 et, par suite, un léger pivotement du fléau dans le sens des aiguilles d'une montre ; la buse 13 étant ainsi davantage dégagée, son débit de fluide sous pression augmente si bien que la pression dans la chambre 11c du vérin 11 diminue et que le piston 11d descend éventuellement jusqu'à une limite inférieure imposée par exemple par une vis réglable de butée 25. Le piston 11d du vérin 11 descend en faisant tourner l'axe de commande 15 du doseur de carburant dans le sens correspondant à une diminution du rapport caractéristique C/P, d'où une diminution du régime N et un déplacement du galet 8 dans le sens inverse du précédent ; en même temps, la force F5 transmise par le ressort 12 diminue, ce qui a pour effet de ramener le fléau vers sa position initiale d'équilibre. La courbe de décélération correspondant à cette phase initiale ne diffère donc pratiquement pas du flanc, presque vertical, de la courbe P (diagramme de la figure 2) partant du point de fonctionnement stable A. Cependant, la phase de descente rapide du piston 16a de l'amortisseur 16 prend fin lorsque le poussoir 17 revient au contact, soit de la came 4, soit de l'organe de butée 24 ; le mouvement de descente du piston 16a de l'amortisseur 16 se poursuit alors grâce à l'expulsion progressive de fluide hors de la chambre 16b, à travers l'étranglement 19, mais à un rythme beaucoup plus lent, imposé par le calibrage dudit étranglement 19. Cette seconde phase de la descente du piston 16a succédant à la première phase rapide produit également, pour les raisons précédemment mentionnées, une réduction du rapport caractéristique C/P, mais à un rythme plus lent et plus progressif ; à cette seconde phase de la décélération correspond l'arc en traits interrompus Q qui, sur le diagramme de la figure 2, relie un point D du flanc presque vertical de la courbe P, au point B de la courbe S, lequel correspond au nouvel état de fonctionnement stable de la turbomachine. Le piston 16a de l'amortisseur 16 est alors revenu au contact de la base 17b du poussoir 17, qui, lui-même, est revenu au contact, par son autre base 17a, avec le pourtour de la came rotative 4.

Il résulte de la description qui précède que le dispositif selon l'invention n'agit que dans le sens du relâchement de l'effort F1 entre la came 4 et le bras de fléau 1a, c'est-à-dire que son introduction modifie la loi de décélération. Comme le montre clairement le diagramme de la figure 2, la substitution de la courbe de décélération A, D, Q, B à la courbe de décélération usuelle A, P, B, se traduit par une réduction de l'amplitude des variations du rapport caractéristique C/P, et par suite, du débit de carburant C ; ceci réduit l'intensité des chocs thermiques auxquels la turbomachine est soumise lors des décélérations brusques, et assure donc un accroissement de la durée de vie des différents organes de la turbomachine.

La pièce 24, précédemment mentionnée, constitue une butée pour la base 17b du poussoir 17, qui, lors des mouvements descendants de ce dernier, d'une part, évite que ledit poussoir ne sorte de la chambre 16b de l'amortisseur 16, et, d'autre part, impose une limite supérieure à l'écartement entre les organes 16a et 17, et par suite à l'amplitude maximale de la variation correspondante du débit C.

Comme on l'a indiqué précédemment, le moteur électrique 10 recevait, du calculateur électronique, des signaux d'erreur en fonction desquels le moteur 10 n'exerçait sur le fléau de la balance tachymétrique que des actions relativement faibles comparativement par exemple à l'action produite par la manette des gaz. Grâce à l'emploi du limiteur de décélération selon la présente invention, on obtient l'avantage supplémentaire suivant : il devient possible d'aménager le moteur de correction· 10 de manière à lui faire exercer sur le fléau des actions du même ordre de grandeur que celles de la manette des gaz. Ainsi, grâce à la diminution de l'amplitude de la courbe de décélération, qui est bien visible sur la figure 2, il devient possible de substituer à la fonction de limite inférieure représentée par la courbe, sensiblement horizontale, Li, sur la figure 1, correspondant à la position du piston 11d en appui sur la vis 25, une fonction de limite inférieure comportant une partie ascendante Li', représentée en traits interrompus sur la même figure, ceci grâce à une plus grande intensité des actions exercées par le moteur 10.

L'organe de butée 24 est facultatif. Dans le cas où l'arrêt constitué par la coopération de la pièce 24 et de la base 17b du poussoir 17 est supprimé, le contact devient permanent entre le pourtour de la came rotative 4 d'une part, et la base 17a du poussoir 17, d'autre part. On peut également prévoir un accouplement permanent entre l'extrémité du poussoir 17 extérieure à l'amortisseur 16 et la came 4 ou un organe de transmission mécanique approprié, accouplé lui-même à la manette des gaz. Comme on l'a déjà indiqué, la présente invention est applicable non seulement à une balance tachymétrique d'un type connu, mais à tout autre régulateur fonctionnellement équivalent.

## Revendications

1. Limiteur de décélération dans un régulateur pour une turbomachine dont le doseur de carburant est commandé à l'aide d'une manette des gaz, agissant sur un régulateur (1 à 10), tel qu'une balance tachymétrique, par l'intermédiaire d'un organe élastique comprimé (3), tel qu'un ressort, caractérisé en ce que le piston libre (16a) d'un amortisseur à fluide (16) et un poussoir (17) sont interposés entre l'organe élastique comprimé (3) et une came (4) commandée par la manette des gaz, en ce qu'un fluide d'ambiance agit sur la même face du piston (16a) que l'organe élastique (3), et en ce que la chambre (16b) de l'amortisseur (16) dans laquelle le poussoir (17) pénètre de façon étanche, communique avec ledit fluide d'ambiance par l'intermédiaire d'une part, d'un clapet antiretour (20) autorisant seulement l'entrée du fluide d'ambiance dans ladite chambre (16b) de l'amortisseur (16) et, d'autre part, d'un étranglement approprié (19).

2. Limiteur de décélération dans un régulateur selon la revendication 1, caractérisé en ce que des moyens sont prévus pour maintenir l'extrémité du poussoir (17), extérieure à l'amortisseur (16), en contact quasi permanent avec le pourtour d'une came (4), par exemple rotative, accouplée avec la manette des gaz.

3. Limiteur de décélération dans un régulateur selon la revendication 2, caractérisé en ce que le poussoir (17), en forme de cylindre creux, est maintenu en contact quasi permanent, par sa base (17a) extérieure à l'amortisseur (16), avec le pourtour de la came (4), par l'action d'un organe élastique tel qu'un ressort (21), qui est logé à l'intérieur du poussoir cylindrique creux (17), de façon à être comprimé entre, d'une part, sa base (17a)en contact avec la came (4), et d'autre part, un prolongement (22) du piston (16a) de l'amortisseur (16) pénétrant dans le poussoir creux (17) par un trou (23) de son autre base (17b).

4. Limiteur de décélération dans un régulateur selon la revendication 3, caractérisé en ce que le prolongement (22) du piston (16a) de l'amortisseur (16), qui pénètre dans le poussoir creux (17) comporte un organe de butée (24) disposé de façon à coopérer avec la base (17b) du poussoir (17) pour limiter supérieurement l'écartement entre le piston (16a) et le poussoir (17) en cas de décélération brutale de grande amplitude, en écartant momentanément le poussoir (17) de la came (4).

## Claims

1. Deceleration limiting device in a regulator for a turbo machine in which the fuel dispenser is controlled by means of a throttle lever, acting on a regulator (1 to 10), such as a tachymetric balance, through a compressed resilient member (3), such as a spring, characterised in that the free piston (16a) of a fluid shock absorber (16) and a push member (17) are interposed between the compressed resilient member (3) and a cam (4) controlled by the throttle lever, in that a fluid at atmospheric pressure acts on the same face of the piston (16a) as the resilient member (3) and in that the chamber (16b) of the shock absorber (16) into which the push member (17) enters in sealed manner communicates with the said fluid which is at ambient pressure through, on the one hand, a non-return valve (20) permitting only the entry of fluid at atmospheric pressure into the said chamber (16b) of the shock absorber (16), and, on the other hand, an appropriate throttle member (19).

2. Deceleration limiting device in a regulator according to Claim 1, characterised in that means are provided for maintaining the end of the push member (17), which is outside the shock absorber (16), in quasi permanent contact with the circumference of a cam (4), for example, a rotary cam, coupled to the throttle lever.

3. Deceleration limiting device in a regulator· according to Claim 2, characterised in that the push member (17), in the form of a hollow cylinder, is maintained in quasi permanent contact, through its base (17a) which is outside the shock absorber (16), with the circumference of the cam (4), through the action of a resilient member such as a spring (21), which is housed inside the hollow cylindrical push member (17), in such a way as to be compressed between, on the one hand, its base (17a) in contact with the cam (4), and, on the other hand, an extension (22) of the piston (16a) of the shock absorber (16) entering the hollow push member (17) through a hole (23) in its other base (17b).

4. Deceleration limiting device in a regulator according to Claim 3, characterised in that the extension (22) of the piston (16a) of the shock absorber (16) which enters into the hollow push member (17) comprises an abutment means (24) disposed in such a way as to co-operate at its upper extreme position with the base (17b) of the push member (17) so as to limit the gap between the piston (16a) and the push member (17) in the event of a sudden, large deceleration by instantly separating the push member (17) from the cam (4).

## Patentansprüche

1. Vorrichtung in einem Regler für eine Turbomaschine zur Begrenzung der Vorzögerung, dessen Kraftstoffdosiereinrichtung mittels eines Gashebels gesteuert wird, der auf einen Regler (1 bis 10) derart einwirkt, daß sich ein Drehzahlgleichgewicht über ein Zwischenglied in Form eines zusammengedrückten elastischen Mittels (3), beispielsweise einer Feder, einstellt, dadurch gekennzeichnet, daß ein freiliegender Kolben (16a) einer hydraulischen Dämpfungseinrichtung (16) und ein Stößel (17) zwischen dem zusammengedrückten elastischen Mittel (3) und einer Nocke (4) angeordnet sind, die durch den Gashebel gesteuert wird, daß ein Umgebungsfluid auf dieselbe Seite des Kolbens (16a) wie das elastische Mittel (3) einwirkt und daß eine Kammer (16b) der Dämpfungseinrichtung (16), die der Stößel (17) abgedichtet durchdringt, mit dem genannten Umgebungsfluid durch Zwischenschaltung zum einen eines Rückschlagventils (20), das nur den Eintritt des Umgebungsfluids in die Kammer (16b) der Dämpfungseinrichtung (16) gestattet, und zum anderen einer geeigneten Querschnittsverengung (19) kommuniziert.

2. Vorrichtung in einem Regler für eine Turbomaschine zur Begrenzung der Verzögerung nach Anspruch 1, dadurch gekennzeichnet, daß Mittel zum Aufrechterhalten einer quasi-permanenten Berührung des Endes des Stößels (17) außerhalb der Dämpfungseinrichtung (16) mit dem Umfang der einen Nocke (4), die zum Beispiel drehbar mit dem Gashebel verbunden ist, vorgesehen sind.

3. Vorrichtung in einem Regler für eine Turbomaschine zur Begrenzung der Verzögerung nach Anspruch 2, dadurch gekennzeichnet, daß der Stößel (17) in Form eines zylindrischen Hohlkörpers über seine Unterseite (17a) außerhalb der Dämpfungseinrichtung (16) mit dem Umfang der Nocke (4) durch die Wirkung eines elastischen Mittels, beispielsweise einer Feder (21), gehalten wird, welches in dem Inneren des zylindrischen hohlen Stößels (17) derart untergebracht ist, daß es einerseits zwischen der Unterseite (17a), die in Berührung mit der Nocke (4) steht, und andererseits einer Verlängerung (22) des Kolbens (16a) der Dämpfungseinrichtung (16), die in den hohlen Stößel (17) durch ein Loch (23) von dessen anderem Ende (17b) her eindringt, zusammengedrückt wird, in quasi-permanenter Berührung gehalten wird.

4. Vorrichtung in einem Regler für eine Turbomaschine zur Begrenzung der Verzögerung nach Anspruch 3, dadurch gekennzeichnet, daß die Verlängerung (22) des Kolbens (16a) der Dämpfungseinrichtung (16), die in den hohlen Stößel (17) eindringt, einen Anschlag (24) derart aufweist, daß dieser mit dem Ende (17b) des Stößels (17) eindringt, einen Anschlag (24) derart aufweist, daß dieser mit dem Ende (17b) des Stößels (17) zum Begrenzen des größten Abstands zwischen dem Kolben (16a) und dem Stößel (17) im Falle einer plötzlichen Verzögerung großen Ausmaßes bei einem vorübergehenden Trennen des Stößels (17) von der Nocke (4) zusammenwirkt.

FIG.: 2

FIG.: 1

1

FIG.: 3

0 070 229